# EUROPÄISCHE PATENTANMELDUNG

(11) **EP 0 989 505 A2**
(43) Veröffentlichungstag der Anmeldung: **29.03.2000**
(21) Anmeldenummer: 99250295.5
(22) Anmeldetag: 27.08.1999
(51) Int. Cl.: G06F 17/60

(54) **Verfahren zum Protokollieren einer Mailingkampagne und zum Erstellen einer Mailingadressenliste für Mailings**

(30) Priorität: 28.08.1998 DE 19839368
(71) Anmelder: Mail Select USA, Inc., Wilmington, Delaware 19801 (US)
(72) Erfinder: Heinrich, Detlev N., 22301 Hamburg (DE)
(74) Vertreter: UEXKÜLL & STOLBERG

(57) **Zusammenfassung**

Die Erfindung betrifft ein Verfahren zum Protokollieren einer Mailingkampagne und Erstellen einer Mailingadressenliste für ein Mailing einer bestimmten Mailingaktion aus wenigstens einer Adressenliste. Das Verfahren gemäß der Erfindung umfaßt das Einlesen wenigstens einer Adressenliste für das aktuelle Mailing in eine Datenverarbeitungsanlage, Umwandeln der einzelnen Adressen in einen eindeutigen Adresscode nach einem vorgebbaren Algorithmus, das Vergleichen der Adresscodes mit in einer Adresscodedatenbank gespeicherten Adresscodeliste wenigstens eines vorhergehenden Mailings, das Speichern eines Adresscodes in der Adresscodeliste, wenn dieser darin noch nicht enthalten ist, das Inkrementieren eines den jeweiligen Adresscodes zugeordneten Zählers, der die Häufigkeit der dem jeweiligen Adresscode zugeordneten Adresse in den vorherigen Mailings derselben Mailingaktion und/oder der Mailingkampagne zählt, das Vergleichen des Zählers mit einem vorgebbaren Schwellenwert oder einem vorgebbaren Wertebereich und Löschen des Adresscodes aus der Adresscodeliste zumindest für das aktuelle Mailing, wenn der Zähler größer als der Schwellenwert ist bzw. in dem Wertebereich liegt, und Erzeugen der Mailingadressenliste für das aktuelle Mailing aus den Adresscodes, die in der Adresscodeliste gespeichert sind.

## Beschreibung

Die Erfindung betrifft ein Verfahren zum Protokollieren einer Mailingkampagne und Erstellen einer Mailingadressenliste für ein Mailing einer bestimmten Mailingaktion aus wenigstens einer Adressenliste.

Mailingkampagnen werden dazu benutzt, um beispielsweise neue Unternehmen in der Bevölkerung oder zumindest einer bestimmten Zielgruppe bekannt zu machen. Eine Mailingkampagne kann dabei mehrere Mailingaktionen aufweisen, die ihrerseits wiederum aus mehreren Mailings besteht. Das aktuelle Mailing umfaßt eine Vielzahl gleicher Vertriebsstücke, Informationsbriefe, Kataloge oder dergleichen, die an eine entsprechende Anzahl von potentiellen Kunden verschickt werden sollen. In einer Mailingaktion werden gleichartige Mailings zu unterschiedlichen Zeitpunkten durchgeführt. Eine Mailingkampagne umfaßt demnach das Versenden von unterschiedlichen Mailings zu unterschiedlichen Zeiten.

Es ist offensichtlich, daß eine Vielzahl von Adressen bearbeitet werden muß. Dazu bedient man sich in der Regel einer Datenverarbeitungsanlage. Hier werden auch aus Datenschutzgründen die zur Verfügung stehenden Adressenlisten in einen eindeutigen Adresscode umgewandelt, die unter anderem für den Auftraggeber der Mailingkampagne nicht nachvollziehbar ist. Der Adresscode wird dabei durch einen entsprechenden Algorithmus erzeugt derart, daß auch unterschiedliche Schreibweisen derselben Adresse erkannt werden und zu einem identischen Adresscode führen. Die Adresscodes werden in einer Adresscodeliste gespeichert.

Zur Erstellung einer Mailingadressenliste für ein durchzuführenden Mailings werden in der Regel Adressenlisten unterschiedlicher Herkunft benutzt. Die Adressenliste werden in eine Datenverarbeitungsanlage eingelesen. Dies kann per Datenträger oder aber auch per Datenfernübertragung mittels eines Telekommunikationsnetzes erfolgen. In der Datenverarbeitungsanlage werden die eindeutigen Adresscodes erzeugt. Hieraus lassen sich aus der Adresscodeliste die Adresscodes der in den Adressenlisten doppelt auftretenden Adressen mittels eines allgemein üblichen Dublettenabgleichs eliminieren. Damit wird erreicht, daß ein- und derselbe Empfänger mit dem aktuellen Mailing nicht mehrfach angeschrieben wird.

Aus der damit bereinigten Adresscodeliste wird dann in bekannter Weise anhand der Adresscodes eine Mailingadressenliste mit den in diesem Mailing anzuschreibenden Empfänger erzeugt. Die Adressenliste kann in Form einer Liste gedruckt werden oder aber elektronisch, optisch und/oder magnetisch gespeichert dem Benutzer zur Verfügung gestellt werden.

Einzelne Mailings oder Mailingaktionen oder gesamte Mailingkampagnen sind mit hohen Kosten verbunden. Grundsätzlich wäre es daher wünschenswert, wenn manche Adressen aus der Mailingadressenliste nach einer bestimmten Anzahl von erfolglosen Mailings entfernt werden. Auch wäre es wünschenswert, zu erfahren, nach welcher Anzahl von Mailings oder auf welches bestimmte Mailing der Empfänger geantwortet hat.

Der Erfindung liegt daher die Aufgabe zugrunde, ein automatisiertes Verfahren zu schaffen, mit der eine Mailingadressenliste erstellt wird, in der nur solche Adressen erfaßt sind, die noch nicht mit der gewünschten Häufigkeit angeschrieben worden sind. Gemäß einem anderen Aspekt der Erfindung soll das Erstellen einer Mailingadressenliste möglich sein, in welcher das Mailing oder zumindest die Häufigkeit, mit der der Empfänger angeschrieben worden ist, erkennbar sein.

Die Aufgabe wird gemäß der Erfindung durch ein Verfahren gelöst, daß das Einlesen wenigstens einer Adressenliste für das aktuelle Mailing in eine Datenverarbeitungsanlage, Umwandeln der einzelnen Adressen in einen eindeutigen Adresscode nach einem vorgebbaren Algorithmus, das Vergleichen der Adresscodes mit in einer Adresscodedatenbank gespeicherten Adresscodeliste wenigstens eines vorhergehenden Mailings, das Speichern eines Adresscodes in der Adresscodeliste, wenn dieser darin noch nicht enthalten ist, aufweist. Weiterhin umfaßt Verfahren das Inkrementieren eines den jeweiligen Adresscodes zugeordneten Zählers, der die Häufigkeit der dem jeweiligen Adresscode zugeordneten Adresse in den vorherigen Mailings derselben Mailingaktion und/oder der Mailingkampagne zählt, und das Vergleichen des Zählers mit einem vorgebbaren Schwellenwert oder einem vorgebbaren Wertebereich und Löschen des Adresscodes aus der Adresscodeliste zumindest für das aktuelle Mailing, wenn der Zähler größer als der Schwellenwert ist bzw. in dem Wertebereich liegt, sowie das Erzeugen der Mailingadressenliste für das aktuelle Mailing aus den Adresscodes, die in der Adresscodeliste gespeichert sind. Hierdurch wird erreicht, daß solche Adressen mit dem aktuellen Mailing nicht angeschrieben werden, die bereits für eine vorbestimmte Häufigkeit, beispielsweise bereits fünfmal, angeschrieben worden sind.

Die andere Aufgabe wird gemäß einer anderen Ausführungsform der Erfindung gelöst. Das Verfahren umfaßt ebenfalls das Einlesen wenigstens einer Adressenliste für das aktuelle Mailing in eine Datenverarbeitungsanlage, Umwandeln der einzelnen Adressen in einen eindeutigen Adresscode nach einem vorgebbaren Algorithmus, das Vergleichen der Adresscodes mit in einer Adresscodedatenbank gespeicherten Adresscodeliste aus den bearbeiteten Adressenlisten wenigstens eines vorhergehenden Mailings, das Speichern des Adresscodes in der Adresscodeliste, wenn dieser darin noch nicht enthalten ist, und das Inkrementieren eines den jeweiligen Adresscodes zugeordneten Zählers, der die Häufigkeit der dem jeweiligen Adresscode zugeordneten Adresse in den vorherigen Mailings derselben Mailingaktion und/oder der Mailingkampagne zählt. Ferner ist das Erzeugen der Mailingadressenliste für das aktuelle Mailing aus den Adresscodes vorgesehen, die in der Adresscodeliste gespeichert sind, wobei den jeweiligen Adressen ein den Zählerstand identifizierender und ausdruckbarer Zählercode zugefügt wird. Dies hat den Vorteil, daß anhand der Adresse unmittelbar erkennbar ist, wie häufig der Empfänger bereits angeschrieben worden ist.

Wesentlich für beide Ausführungsformen der Erfindung ist die Adresscodedatenbank, in der die historischen Daten einer Mailingkampagne gespeichert sind. Die Adresscodedatenbank umfaßt nicht nur die Adresscodes für das aktuelle Mailing sondern auch die der vorhergehenden Mailings. Ein Abgleich ist damit leicht möglich.

Es ist zweckmäßig, die Adressen und gegebenfalls die diesen zugeordneten Zählercodes der Mailingadressenliste auf Etiketten, unmittelbar in Werbebriefe, Bestellformulare oder dergleichen zu drucken. Die Antwort eines Empfängers kann dann unmittelbar auf ein bestimmtes Mailing zurückgeführt werden. Insbesondere bei Anworten mittels eines Bestellscheines, der den entsprechenden Code aufweist, können die erfolgreichen Mailings erkannt werden.

Bei der Durchführung des Verfahrens gemäß der Erfindung werden im Laufe der Zeit Adressen für wenigstens ein bestimmtes Mailing aus der Mailingadressenliste gelöscht werden. Es ist gemäß einer zweckmäßigen Ausgestaltung der Erfindung vorgesehen, daß die aus der Adresscodeliste für das aktuelle Mailing gelöschten Adresscodes in einer weiteren Codeliste gespeichert werden. Dies hat den Vorteil, daß solche Adressen für eine andere Mailingaktion der Mailingkampagne oder auch für ein späteres Mailing derselben Mailingaktion wieder aktiviert werden können.

Es kann auch vorgesehen werden, daß wenigstens eine Adressenliste mit solchen Adressen oder Adresscodes eines vorherigen Mailings eingelesen wird, um die diesen zugeordneten Adresscodes aus der Adresscodeliste zumindest für das aktuelle Mailing hinzuzufügen, zu entfernen, zu löschen oder in einer weiteren Codeliste zu speichern. Hiermit können bestimmte Adressen aus der Mailingadressenliste unmittelbar gehandhabt werden.

Gemäß einer weiterführenden Ausführungsform der Erfindung ist vorgesehen, daß dem Adresscode ein erster Identifizierungscode zugefügt wird, um die Adressenliste identifizieren zu können, aus der die diesem Adresscode zugeordnete Adresse stammt. Auch kann es zweckmäßig sein, wenn dem Adresscode ein zweiter Identifizierungscode zugefügt wird, um den Adresscode einem Mailing einer bestimmten Mailingaktion zuzuordnen. Es kann dabei vorgesehen werden, daß der Schwellenwert und/oder der Wertebereich für den Zähler für unterschiedliche Identifizierungscodes unterschiedlich voreingestellt wird. Dadurch können Adressen aus bestimmten Adressenlisten, die einem bestimmten Profil entsprechen, bezüglich der Häufigkeit separat behandelt werden. Die Identifizierungscodes können auch Bestandteil der ausdruckbaren Adresse sein.

Mittels der Adresscodedatenbank lassen sich aussagekräftige Protokolle über die Mailingkampagne erstellen. Es kann ein Protokoll erzeugt wird, in dem die Anzahl der Adressen in Abhängigkeit von der Häufigkeit in den Mailings zumindest einer Mailingaktion aufgelistet ist. Auch kann anhand des ersten Identifizierungscodes ein Protokoll erzeugt wird, in dem die Anzahl der Adressen aus den einzelnen Adressenlisten in Abhängigkeit von der Häufigkeit in den Mailings zumindest einer Mailingaktion aufgelistet ist. Zudem ist es möglich, daß anhand des zweiten Identifizierungscodes ein Protokoll erzeugt wird, in dem die Anzahl der Adressen in Abhängigkeit von der Häufigkeit in den Mailings einer bestimmten Mailingaktion aufgelistet ist. Es ist offensichtlich, daß die Mailingkampagne vollständig protokolliert werden kann. Anhand der Antworten, die zudem über den Zählercode identifizierbar sind, kann das Antwortverhalten geprüft werden, um beispielsweise zukünftige Mailings vorab abschätzen zu können. Dadurch können Kosten eingespart werden.

Selbstverständlich kann vorgesehen werden, daß für jedes Mailing die Adresscodes untereinander verglichen und mehrfach auftretende Adresscodes entfernt werden. Damit werden doppelte Anschreiben an ein- und denselben Empfänger vermieden.

Die Erfindung wird im folgenden anhand eines Beispiels näher erläutert. Ein Unternehmen möchte eine Mailingkampagne starten, daß mehrere unterschiedliche Mailingaktionen mit mehreren gleichen, aber zeitlich aufeinanderfolgenden Mailings umfaßt.

Das Unternehmen möchte alle Personen erreichen, die in drei unterschiedlichen Adressenlisten A, B, C aus unterschiedlicher Quelle vorhanden sind. Zum Erstellen einer Mailingadressenliste, die unmittelbar zum Bedrucken der Adresslabels, der Bestellscheine oder dergleichen herangezogen werden kann, wird nunmehr wie folgt vorgegangen.

Zum Anfang der Mailingkampagne werden zunächst die Adressenliste A, B und C eingelesen und mittels eines vorgebbaren Algorithmusses in eindeutige Adresscodes umgewandelt. Anschließend erfolgt der Dublettenabgleich, mit dem doppelte Adressen eliminiert werden. Die aus den drei Adressenlisten resultierende Adresscodeliste wird zum einen in einer Adresscodedatenbank gespeichert. Zum anderen wird hieraus die gewünschte Mailingadressenliste erzeugt.

Es ist vorgesehen, daß dem Adresscode oder aber auch der Adresse für das Mailing selbst ein Zählereode eines Zählers zugefügt wird, der der Anzahl entspricht, wie häufig diese Adresse in der Mailingkampagne und/oder der Mailingaktion bereits angeschrieben worden ist. Am Anfang der Kampagne steht dieser Zähler demnach auf "1".

Nach diesem Mailing soll in der gleichen Mailingaktion zu einem späteren Zeitpunkt ein weiteres Mailing verschickt werden. Es werden dann wieder die Adressenlisten A, B und C besorgt. Diese sind jedoch inzwischen auf den neusten Stand gebracht und weisen neue Adressen auf. Auch diese werden wie im ersten Mailing bearbeitet.

Im nächsten Schritt erfolgt der Abgleich mit der Adresscodeliste, die aus dem vorherigen Mailing in der Adresscodedatenbank gespeichert ist. Dies führt dazu, daß lediglich die neuen Adressen übernommen werden. Anschließend wird der Zähler inkrementiert, d. h. die neuen Adressen erhalten den Zählerstand "1", während die vorherigen den Zählerstand "2" erhalten. Die folgenden Mailings werden entsprechend vorbereitet.

Es kann nunmehr ein Schwellenwert oder ein Wertebereich vorgesehen werden, bei oder in dem die betreffenden Adressen nicht in die Mailingadressenliste des aktuellen Mailings aufgenommen werden. Der Schwellenwert kann beispielsweise "5" betragen, so daß die betreffenden Adressen nach dem fünften Mal nicht mehr angeschrieben werden. Der Wertebereich kann beispielsweise die Werte 4, 6,7 und 10 umfassen, so daß diese Adressen bei den entsprechenden Mailings nicht angeschrieben werden.

Mit Hilfe des Zählerstandes kann eine aktuelle Auswertung der Mailingaktion und auch der Mailingkampagne erfolgen. Es kann durch entsprechendes Zuordnen festgestellt werden, wie häufig ein Adressat in einer Mailingaktion bereits angeschrieben worden ist. Sofern eine Antwort der Adressaten vorliegt, die anhand des Zählercodes identifiziert werden kann, ist eine weitere Auswertung einer Mailingaktion dahingehend möglich, wie häufig ein Adressat anzuschreiben ist, bis er auf ein Mailing antwortet.

Die Adressen, die aufgrund des Zählerstandes nicht in das aktuelle Mailing aufgenommen werden, können beispielsweise gelöscht werden. Zweckmäßig ist es jedoch, diese in der Adresscodedatenbank zu speichern, um sie später noch einmal aktivieren zu können. Dies kann beispielsweise nach einem Wechsel der Mailingaktion erfolgen. Bei einem Aktionswechsel kann vorgesehen werden, daß der Zähler aller Adressen zurückgesetzt wird.

Den Adresscodes in der Adresscodedatenbank kann auch noch ein Code zugefügt werden, der die Adressenliste selbst kennzeichnet. Hierdurch kann eine weitere Auswertung dahingehend erfolgen, ob und wann die Adressaten der Adressenliste A, B und C auf ein Mailing reagieren. Sofern in einer Mailingkampagne unterschiedliche Mailingaktionen durchgeführt werden, kann mit einfachen Mitteln das Antwortverhalten der Adressaten aus unterschiedlichen Adressenlisten ermittelt werden.

Damit können Rückschlüsse für zukünftige Mailings gezogen werden, die ein wirtschaftliches und zielsicheres Erreichen der potentiellen Kunden ermöglichen. Insbesondere ist es auch möglich, unergiebige Adressenlisten einer bestimmten Herkunft von vornherein auszulassen. Die Mailings werden somit noch zielsicherer.

## Patentansprüche

1. verfahren zum Protokollieren einer Mailingkampagne und Erstellen einer Mailingadressenliste für ein Mailing einer bestimmten Mailingaktion aus wenigstens einer Adressenliste, welches Verfahren folgende Schritte umfaßt:
Einlesen wenigstens einer Adressenliste für das aktuelle Mailing in eine Datenverarbeitungsanlage, Umwandeln der einzelnen Adressen in einen eindeutigen Adresscode nach einem vorgebbaren Algorithmus,
Vergleichen der Adresscodes mit in einer Adresscodedatenbank gespeicherten Adresscodeliste wenigstens eines vorhergehenden Mailings,
Speichern eines Adresscodes in der Adresscodeliste, wenn dieser darin noch nicht enthalten ist,
Inkrementieren eines den jeweiligen Adresscodes zugeordneten Zählers, der die Häufigkeit der dem jeweiligen Adresscode zugeordneten Adresse in den vorherigen Mailings derselben Mailingaktion und/oder der Mailingkampagne zählt,
Vergleichen des Zählers mit einem vorgebbaren Schwellenwert oder einem vorgebbaren Wertebereich und Löschen des Adresscodes aus der Adresscodeliste zumindest für das aktuelle Mailing, wenn der Zähler größer als der Schwellenwert ist bzw. in dem Wertebereich liegt, und
Erzeugen der Mailingadressenliste für das aktuelle Mailing aus den Adresscodes, die in der Adresscodeliste gespeichert sind.

2. Verfahren zum Protokollieren einer Mailingkampagne und Erstellen einer Mailingadressenliste für ein Mailing einer bestimmten Mailingaktion aus wenigstens einer Adressenlisten, welches Verfahren folgende Schritte umfaßt:
Einlesen wenigstens einer Adressenliste für das aktuelle Mailing in eine Datenverarbeitungsanlage, Umwandeln der einzelnen Adressen in einen eindeutigen Adresscode nach einem vorgebbaren Algorithmus,
Vergleichen der Adresscodes mit in einer Adresscodedatenbank gespeicherten Adresscodeliste aus den bearbeiteten Adressenlisten wenigstens eines vorhergehenden Mailings,
Speichern des Adresscodes in der Adresscodeliste, wenn dieser darin noch nicht enthalten ist,
Inkrementieren eines den jeweiligen Adresscodes zugeordneten Zählers, der die Häufigkeit der dem jeweiligen Adresscode zugeordneten Adresse in den vorherigen Mailings derselben Mailingaktion und/oder der Mailingkampagne zählt, und
Erzeugen der Mailingadressenliste für das aktuelle Mailing aus den Adresscodes, die in der Adresscodeliste gespeichert sind, wobei den jeweiligen Adressen ein den Zählerstand identifizierender und ausdruckbarer Zählercode zugefügt wird.

3. Verfahren nach Anspruch 1 oder 2, dadurch gekennzeichnet, daß die Adressenliste für das aktuelle Mailing auf einem elektronischen, optischen und/oder magnetischen Datenträger gespeichert wird.

4. Verfahren nach einem der Ansprüche 1 bis 3, dadurch gekennzeichnet, daß die Adressen und ggf. der Zählercode der Mailingadressenliste ausgedruckt werden.

5. Verfahren nach Anspruch 3, dadurch gekennzeichnet, daß die Adressen und ggf. der Zählercode auf Etiketten, unmittelbar in Brieftexte, Bestellscheine oder dergleichen gedruckt werden.

6. Verfahren nach einem der Ansprüche 1 bis 5, dadurch gekennzeichnet, daß die aus der Adresscodeliste für das aktuelle Mailing gelöschten Adresscodes in einer weiteren Codeliste gespeichert werden.

7. Verfahren nach einem der Ansprüche 1 bis 6, dadurch gekennzeichnet, daß wenigstens eine Adressenliste mit solchen Adressen oder Adresscodes eines vorherigen Mailings eingelesen wird, um die diesen zugeordneten Adresscodes aus der Adresscodeliste zumindest für das aktuelle Mailing hinzuzufügen, zu entfernen, zu löschen oder in einer weiteren Codeliste zu speichern.

8. Verfahren nach einem der Ansprüche 1 bis 7, dadurch gekennzeichnet, daß dem Adresscode ein erster Identifizierungscode zugefügt wird, um die Adressenliste identifizieren zu können, aus der die diesem Adresscode zugeordnete Adresse stammt.

9. Verfahren nach einem der Ansprüche 1 bis 8, dadurch gekennzeichnet, daß dem Adresscode ein zweiter Identifizierungscode zugefügt wird, um den Adresscode einem Mailing einer bestimmten Mailingaktion zuzuordnen.

10. Verfahren nach einem der Ansprüche 1 bis 9, dadurch gekennzeichnet, daß der Schwellenwert und/oder der Wertebereich für den Zähler für unterschiedliche Identifizierungscodes unterschiedlich voreingestellt wird.

11. Verfahren nach einem der Ansprüche 1 bis 10, dadurch gekennzeichnet, daß ein Protokoll erzeugt wird, in dem die Anzahl der Adressen in Abhängigkeit von der Häufigkeit in den Mailings zumindest einer Mailingaktion oder der Mailingkampagne aufgelistet ist.

12. Verfahren nach einem der Ansprüche 1 bis 11, dadurch gekennzeichnet, daß anhand des ersten Identifizierungscodes ein Protokoll erzeugt wird, in dem die Anzahl der Adressen aus den einzelnen Adressenlisten in Abhängigkeit von der Häufigkeit in den Mailings zumindest einer Mailingaktion oder der Mailingkampagne aufgelistet ist.

13. Verfahren nach einem der Ansprüche 1 bis 12, dadurch gekennzeichnet, daß anhand des zweiten Identifizierungscodes ein Protokoll erzeugt wird, in dem die Anzahl der Adressen in Abhängigkeit von der Häufigkeit in den Mailings einer bestimmten Mailingaktion aufgelistet ist.

14. Verfahren nach einem der Ansprüche 1 bis 13, dadurch gekennzeichnet, daß bei einem Mailing einer neuen Mailingaktion der Adresscodeliste die vorher aus dieser entfernten Adresscodes aus den weiteren Codelisten hinzugefügt werden.

15. Verfahren nach einem der Ansprüche 1 bis 14, dadurch gekennzeichnet, daß für jedes Mailing die Adresscodes untereinander verglichen und der mehrfach auftretende Adresscodes entfernt werden.
